# DEMANDE DE BREVET EUROPEEN

(11) **EP 1 736 358 A1**
(43) Date de publication de la demande: **27.12.2006**
(21) Numéro de dépôt: 06300707.4
(22) Date de dépôt: 21.06.2006
(51) Int. Cl.: B60Q 1/04

(54) **Projecteur de véhicule automobile**

(30) Priorité: 21.06.2005 FR 0551682
(71) Demandeur: Peugeot Citroen Automobiles SA, 78943 Vélizy-Villacoublay Cedex (FR)
(72) Inventeur: Jacquot, Renaud, 78150, LE CHESNAY (FR); Genevieve, Cécile, 92140, CLAMART (FR)
(74) Mandataire: Fernandez, Francis Lionel

(57) **Abrégé**

La présente invention concerne un projecteur de véhicule automobile.

Le projecteur est caractérisé en ce que sa glace (3) comporte à au moins une partie de sa périphérie située entre la paroi avant (3a) de la glace (3) et le boîtier (2) du projecteur (1), une zone d'affaiblissement frangible (Z) se rompant lorsque le boîtier vient en appui sur une pièce de structure rigide indéformable (5) solidaire de la caisse (C) du véhicule.

L'invention trouve application dans le domaine de l'automobile.

## Description

La présente invention concerne un projecteur de véhicule automobile situé dans une zone sensible aux chocs de ce véhicule.

On connaît un projecteur dont le boîtier est fixé à la caisse du véhicule par des pattes de fixation fusibles se rompant lors d'un choc appliqué au projecteur pour déplacer le boîtier vers l'arrière du véhicule. Cependant, cette fixation fusible nécessite un espace libre ménagé derrière le boîtier du projecteur et incompatible avec le contexte d'implantation actuelle des projecteurs, où la place disponible autour de ceux-ci est réduite, d'autant plus que les projecteurs actuels ont des dimensions de plus en plus importantes et sont implantés en avant des principaux éléments d'absorption des chocs.

On connaît également un projecteur dont le boîtier est constitué de plusieurs parties pouvant s'encastrer l'une dans l'autre et reliées par une zone frangible de telle sorte que, lorsqu'un choc est appliqué au boîtier, ce dernier se déplace par rapport à la caisse du véhicule jusqu'à ce qu'il vienne en appui avec un support fixe provoquant la rupture de la zone frangible et la pénétration successive des parties constitutives du boîtier les unes dans les autres. Ce projecteur connu présente les mêmes inconvénients que ceux du projecteur à pattes de fixation fusibles.

En outre, ces deux solutions connues de déplacement à l'arrière du véhicule du boîtier du projecteur suite à la rupture sous choc des pattes ou de la zone frangible, ne sont pas adaptées à des formes de glaces allongées du projecteur et qui, lors d'un recul consécutif à un choc, déforment l'aile avant du véhicule jusqu'à empêcher l'ouverture des portes avant de ce véhicule.

La présente invention a pour but d'éliminer les inconvénients ci-dessus en proposant un projecteur de véhicule automobile comprenant un boîtier monté sur la caisse du véhicule et une glace de protection en matériau rigide transparent à la lumière montée sur le boîtier au-devant de ce dernier et qui est caractérisé en ce que la glace comporte à au moins une partie de sa périphérie située entre la paroi avant de la glace et le boîtier une zone d'affaiblissement frangible et en ce qu'une pièce rigide indéformable solidaire de la caisse du véhicule est disposée en regard de la partie arrière du boîtier qui est en appui sur la pièce rigide ou vient en appui sur celle-ci lors d'un choc appliqué sur la glace, de manière à provoquer la rupture de la zone d'affaiblissement frangible de la glace sous ce choc.

Avantageusement, le boîtier comprend des moyens de renforcement ou de rigidification permettant de transmettre les efforts du choc à la zone d'affaiblissement frangible de la glace et constitués par une surépaisseur de la paroi latérale et/ou de fond du boîtier, des nervures longitudinales de la paroi latérale du boîtier et/ou une structure en nid d'abeille de la paroi de fond de ce boîtier.

Le boîtier est latéralement en appui sur une partie rigide de la doublure d'aile correspondante du véhicule pour empêcher le déplacement latéral du boîtier dans cette aile lors du choc appliqué à la glace.

La glace comprend un rebord périphérique arrière en gradin au voisinage de sa liaison au boîtier et la zone d'affaiblissement frangible de la glace comprend un amincissement du rebord arrière et au moins une rainure réalisée dans la face de ce rebord en regard du boîtier.

Le boîtier est relié à la caisse du véhicule par au moins une patte de fixation se rompant lors du choc appliqué à la glace pour amener la partie arrière du boîtier en appui sur la pièce rigide indéformable constituée par un pendard en tôle.

Le boîtier du projecteur est en appui ou vient en appui sur la pièce rigide indéformable par sa paroi de fond ou par l'intermédiaire d'une excroissance rigide solidaire de cette paroi de fond.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- la figure 1 est une vue schématique du projecteur de véhicule automobile conforme à l'invention ;
- la figure 2 est une vue agrandie en section longitudinale du projecteur de l'invention ;
- la figure 3 est une vue partielle en perspective du boîtier du projecteur de l'invention suivant la flèche III de la figure 2 ;
- la figure 4 est une vue en perspective agrandie d'une partie de la glace de projecteur suivant la flèche IV de la figure 2 ;
- la figure 5 est une vue en section agrandie de la glace du projecteur de l'invention ;
- la figure 6 est une vue en perspective de côté d'une partie du boîtier du projecteur de l'invention ; et
- la figure 7 est une vue de dessus en perspective suivant la flèche VII de la figure 6.

En se reportant aux figures, la référence 1 désigne un projecteur d'éclairage avant d'un véhicule automobile pouvant être implanté au-dessus du pare-chocs avant du véhicule.

Le projecteur 1 comprend un boîtier 2 pouvant être réalisé en métal rigide et une glace de protection 3 en matériau rigide transparent à la lumière fixée au boîtier 2 au-devant de celui-ci. Le bord arrière de la glace 3 est logé dans une zone de bordure avant 2a du boîtier 2 en étant fixé dans celle-ci par tout moyen approprié, par exemple par collage. Le matériau de la glace 3, qui constitue la pièce la plus rigide du projecteur 1, est quasiment incassable lors d'un choc, même violent, et à cet effet peut être à base de polycarbonate.

Le boîtier 2 du projecteur 1 est monté sur la caisse C du véhicule et peut être fixé à celle-ci par au moins une patte 4 pouvant se rompre lors d'un choc appliqué à la glace 3 du projecteur.

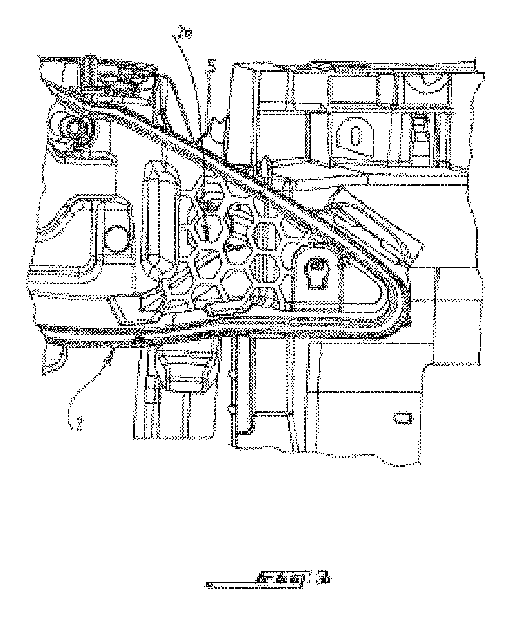

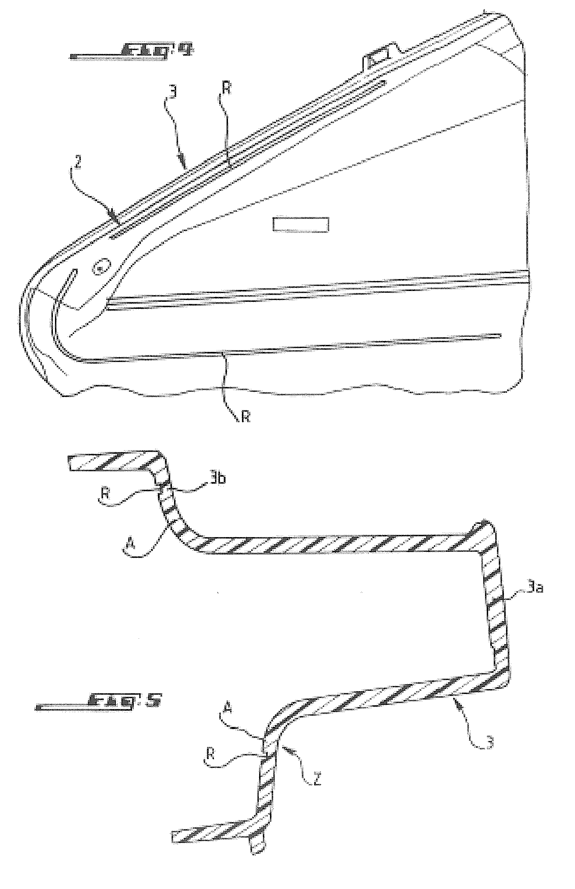

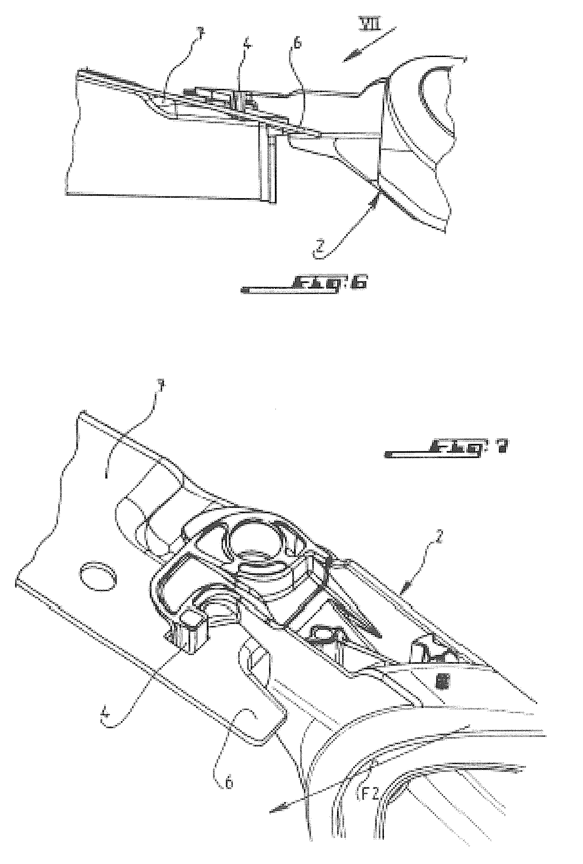

Selon l'invention, la glace 3 comporte à au moins une partie de sa périphérie située entre la paroi avant 3a de la glace et le boîtier 2, une zone Z d'affaiblissement frangible. De préférence, la zone Z est formée dans un rebord périphérique arrière en gradin 3b de la glace 3 situé au voisinage de la liaison de la glace 3 au boîtier 2. Comme cela ressort mieux des figures 4 et 5, la zone d'affaiblissement frangible Z est constituée par un amincissement A du rebord 3b relativement à l'épaisseur générale de la paroi latérale et frontale de la glace 3 et une ou plusieurs rainures R réalisées dans la face du rebord périphérique 3b de la glace 3 tournée vers le boîtier 2.

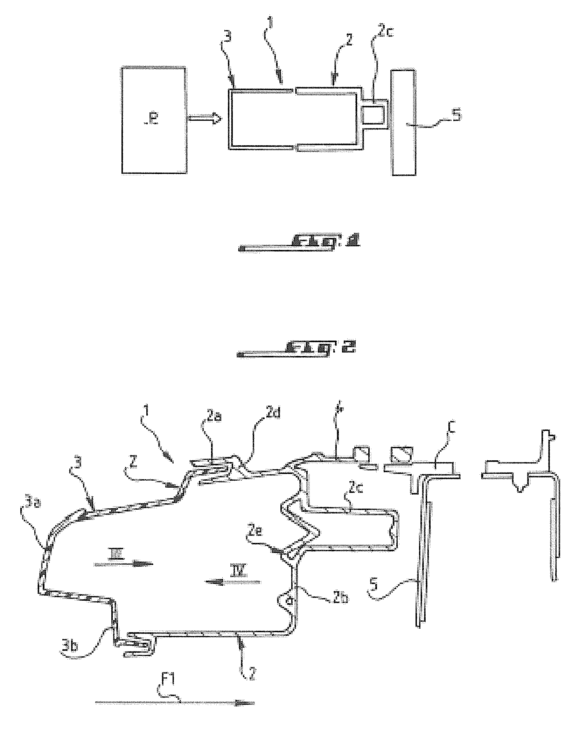

La zone d'affaiblissement Z permet, lors d'un choc appliqué à la glace 3 suivant le sens symbolisé par la flèche F1 en figure 2 et sensiblement parallèle à la direction longitudinale du véhicule, de favoriser le cisaillement de la glace au niveau de son rebord périphérique 3b. Il est à noter que la partie du rebord périphérique 3b de la glace 3 où se trouve la zone d'affaiblissement Z est invisible de l'extérieur en position montée du projecteur 1 sur le véhicule. Bien entendu, la zone d'affaiblissement retenue reste compatible avec les contraintes existant de la glace 3 et dont les principales sont son aspect, son style, son démoulage, son injection, ses épaisseurs calculées pour la photométrie et son étanchéité.

Pour provoquer la rupture de la zone d'affaiblissement Z de la glace 3 sous un choc, on prévoit différents moyens de transmission des efforts du choc à la glace 3.

Ces moyens comprennent tout d'abord une pièce rigide indéformable 5 en tôle solidaire de la caisse C du véhicule en étant disposée en regard de la partie arrière du boîtier 2 du projecteur 1. Comme représenté en figure 2, la pièce rigide 5 est constituée par un pendard pouvant supporter des efforts allant jusqu'à 500 daN avant déformation.

La pièce de structure rigide 5 constitue un appui de la partie arrière du boîtier 2 dans la direction F1 du choc en étant disposée perpendiculairement à cette direction. La figure 2 montre que la partie arrière du boîtier 2 comprend la paroi de fond 2b du boîtier 2 à laquelle est solidarisée une excroissance longitudinale dont l'extrémité est espacée de la pièce rigide 5 sur laquelle vient en appui l'excroissance 2c après déplacement du projecteur 1 suite à la rupture d'une ou plusieurs de pattes de fixation 4 du projecteur à la caisse C du véhicule. Selon une variante non représentée, l'excroissance 2c peut être directement en appui sur la pièce rigide 5 et, le cas échéant, en absence de cette excroissance, la paroi de fond 2b du boîtier 2 peut être elle-même espacée de la pièce 5 ou directement en appui sur celle-ci. La pièce de structure rigide 5 permet de prendre en étau le projecteur 1 lors d'un choc appliqué à la glace 3 de manière à concentrer les efforts du choc dans la zone d'affaiblissement frangible Z et, par conséquent, provoquer la rupture de cette zone.

Les moyens permettant également de transmettre les efforts du choc à la glace 3 du projecteur 1 comprennent en outre des moyens de renforcement ou de rigidification du boîtier 2. Ces moyens comprennent des nervures longitudinales 2d de renforcement de la paroi latérale de ce boîtier situées de préférence en avant du boîtier 2 à proximité de la zone d'affaiblissement frangible Z de la glace 3 et/ou une surépaisseur au moins locale de la paroi latérale ou de la paroi de fond 2b du boîtier 2 et/ou une structure en nid d'abeille 2e, mieux visible en figure 3, de la paroi de fond 2b du boîtier 2. Ces moyens de rigidification et de renforcement, associés à la zone d'affaiblissement locale Z de la glace 3, favorise la rupture de cette zone lors d'un choc appliqué à la glace.

Afin de limiter et, le cas échéant, d'empêcher le déplacement du boîtier 2 du projecteur 1 dans l'aile correspondante du véhicule, la paroi latérale de ce boîtier est en appui sur une partie d'excroissance 6 de la doublure d'aile 7 dont la rigidité est plus élevée que celle du boîtier 2 pour permettre l'arrêt du déplacement latéral de ce boîtier lors du choc appliqué à la glace 3 provoquant le déplacement naturel du projecteur 1 comme symbolisé par la flèche F2. On empêche ainsi le recul de l'aile du véhicule et, par conséquent, tout risque d'endommager la porte avant correspondante du véhicule.

Ainsi, lors d'un choc appliqué à la glace 3 du projecteur 1 dû par exemple à un piéton P renversé par le véhicule, la force résultante F1 prend en étau le projecteur avec la pièce de structure rigide 5, qui reprend cette force avec les moyens de renforcement et de rigidification du boîtier pour provoquer le cisaillement de la glace 3 dans sa zone d'affaiblissement Z.

La solution de l'invention permet ainsi de casser la glace du projecteur au niveau de sa zone d'affaiblissement frangible, de limiter, voire même d'éliminer, les efforts transmis à l'aile correspondante du véhicule lors d'un choc, tout en protégeant les composants mécaniques environnants implantés sous le capot du véhicule.

## Revendications

1. Projecteur de véhicule automobile comprenant un boîtier (2) monté sur la caisse (C) du véhicule et une glace de protection (3) en matériau rigide transparent à la lumière montée sur le boîtier (2) au-devant de ce dernier, **caractérisé en ce que** la glace (3) comporte à au moins une partie de sa périphérie située entre la paroi avant (3a) de la glace (3) et le boîtier (2) une zone d'affaiblissement frangible (Z) et **en ce qu'**une pièce rigide indéformable (5) solidaire de la caisse (C) du véhicule est disposée en regard de la partie arrière (2b, 2c) du boîtier (2) qui est en appui sur la pièce rigide (5) ou vient en appui sur celle-ci lors d'un choc appliqué sur la glace (3), de manière à provoquer la rupture de la zone d'affaiblissement frangible (Z) de la glace (3) sous ce choc.

2. Projecteur selon la revendication 1, **caractérisé en ce que** le boîtier (2) comprend des moyens de renforcement ou de rigidification permettant de transmettre les efforts du choc à la zone d'affaiblissement frangible (Z) de la glace (3) et constitués par une surépaisseur de la paroi latérale et/ ou de fond du boîtier, des nervures longitudinales (2d) de la paroi latérale du boîtier (2) et/ou une structure en nid d'abeille (2e) de la paroi de fond (2b) du boîtier (2).

3. Projecteur selon la revendication 1 ou 2, **caractérisé en ce que** le boîtier (2) est latéralement en appui sur une partie rigide (6) de la doublure d'aile correspondante (7) du véhicule pour empêcher le déplacement latéral du boîtier (2) dans cette aile lors du choc appliqué à la glace (3).

4. Projecteur selon l'une des revendications précédentes, **caractérisé en ce que** la glace (3) comprend un rebord périphérique arrière en gradin (3b) au voisinage de sa liaison au boîtier (2) et **en ce que** 1a zone d'affaiblissement frangible (Z) de la glace (3) comprend un amincissement (A) du rebord arrière (3b) et au moins une rainure (R) réalisée dans la face du rebord en regard du boîtier (2).

5. Projecteur selon l'une des revendications précédentes, **caractérisé en ce que** le boîtier (2) est relié à la caisse (C) du véhicule par au moins une patte de fixation (4) se rompant lors du choc appliqué à la glace (3) pour amener la partie arrière du boîtier (2) en appui sur la pièce rigide (5) constituée par un pendard en tôle.

6. Projecteur selon l'une des revendications précédentes, **caractérisé en ce que** le boîtier (2) du projecteur (1) est en appui ou vient en appui sur la pièce rigide (5) par sa paroi de fond (2b) ou par l'intermédiaire d'un excroissance rigide (2c) solidaire de cette paroi de fond.
